Europäisches Patentamt

European Patent Office

Office européen des brevets

(11) Publication number: **0 363 103**
**A2**

## EUROPEAN PATENT APPLICATION

(21) Application number: 89309997.8

(22) Date of filing: 29.09.89

(51) Int. Cl.5: **C08J 7/00** , **C08J 7/12** ,
**C08K 3/04** , **C08K 3/08** ,
**C08K 7/04** , //B05B5/00

(30) Priority: 05.10.88 JP 251671/88

(43) Date of publication of application:
11.04.90 Bulletin 90/15

(84) Designated Contracting States:
AT BE CH DE ES FR GB GR IT LI LU NL SE

(71) Applicant: POLYPLASTICS CO. LTD.
3-13, Azuchicho, 2-chome
Chuo-Ku Osaka-shi Osaka(JP)

(72) Inventor: Suzuki, Yoshiharu
3-2, Nakanodai 1-chome Fujikawamachi
Ihara-gun
Shizuoka(JP)

(74) Representative: Jackson, Peter et al
HYDE, HEIDE & O'DONNELL 146 Buckingham
Palace Road
London SW1W 9TR(GB)

(54) Method of conducting electrostatic coating of crystalline thermoplastic resin molding and coated plastic molding.

(57) A molded article of a crystalline thermoplastic resin with an electrostatic coating is effectively produced by preparing a molded article of a composition comprising 100 parts by weight of the crystalline thermoplastic resin and 2 to 100 parts by weight of one or more electrically conductive fillers, roughening the surface of the article through (1) a chemical method and/or (2) a physical method and then electrostatically coating the article.

EP 0 363 103 A2

# METHOD OF CONDUCTING ELECTROSTATIC COATING OF CRYSTALLINE THERMOPLASTIC RESIN MOLDING AND COATED PLASTIC MOLDING

The present invention relates to an improved electrostatic coating method by which a coating having excellent adhesion can be formed on a crystalline thermoplastic resin molding, and a coated plastic molding prepared by said method.

[Prior Art]

The air spray method has been generally used in the art for coating a crystalline thermoplastic resin. However, in this method, the coating deposition efficiency is as low as about 20 to 50%, which inevitably brings about an increase in the working cost and a deterioration of a coating environment. For this reason, electrostatic coating has attracted attention as a method which can attain a high paint coating deposition efficiency. However, the electrostatic coating is a method which has hitherto been utilized for coating a metal having high electric conductivity, and cannot be applied in itself to a resin molding which is a poor conductor. Accordingly, a method has begun to be used which comprises preliminary applying a conductive agent composed mainly of a cationic surfactant to the surface of a plastic to impart a conductivity of $10^3$ to $10^9$ $\Omega$ in terms of surface resistivity to the plastic and subjecting the plastic to electrostatic coating.

Since, however, this method requires the use of a hydrophilic solvent as the conductive agent, it is disadvantageous in that the surface of the molding is liable to incorporate moisture so that pinholes and blister are apt to be formed during drying of a top coating. Further, this method had a problem that although it can be applied to an amorphous thermoplastic resin having relatively excellent adhesion to paint, the application to a thermoplastic resin intended in the present invention exerts an adverse effect on the adhesive strength of the coating. Meanwhile a primer paint containing a conductive filler instead of a conductive agent for imparting conductivity to the paint has begun to be used.

However, in general, the above method wherein a conductive primer is used has various severe economic disadvantages including necessity of resorting to an inefficient coating method such as the air spray method in the application of the primer, an increase of the coating steps, difficulty of applying a uniform coating to a molding having a complicated shape, and hindrance to the automation of the coating step, and further difficulty of forming a thin coating film and adhesion of the coating film which is not always satisfactory.

( Summary of the Invention )

The present inventors have investigated various methods with a view to realizing electrostatic coating which exhibits high coating deposition efficiency in the electrostatic coating of the surface of a crystalline thermoplastic resin and is excellent in the adhesive strength, and as a result have found that a coating film having a high adhesive strength can be uniformly formed with high coating deposition efficiency by roughening the surface of a molding of a crystalline thermoplastic resin composition having electrical conductivity imparted thereto by adding a conductive filler to remove a thin resin layer covering the surface of the molding, thereby enhancing a conductive effect through exposure of the conductive filler on the surface of the molding and, at the same time, improving the adhesion to a paint through an anchoring effect of the surface of the molding, which has led to the completion of the present invention.

The invention provides a method for producing a molded article of a crystalline thermoplastic resin with an electrostatic coating, which comprises preparing a molded article of a composition comprising 100 parts by weight of the crystalline thermoplastic resin and 2 to 100 parts by weight of at least one electrically conductive filler, roughening the surface of the article through (1) a chemical method and then electrostatically coating the article.

It is preferable that the physically roughening method (1) is selected from liquid honing, sandblasting, laser etching, sputter etching and plasma etching and the chemically roughening method (2) is carried out by immersing the article in an aqueous solution of sulfuric acid, hydrochloric acid, nitric acid, chromic acid, phosphoric acid, sodium hydroxide and potassium hydroxide.

The roughening step may be conducted in order to improve the adhesion between the article and the electrostatically coated layer.

The invention may be effectively worked for a crystalline thermoplastic resin such as polyacetal, polyester and polyphenylene sulfide.

The filler may in the form of particles having an average size of 30 $\mu$m or smaller, flakes having an average size of 30 $\mu$m or smaller or fibers having an average diameter of 30 $\mu$m or smaller and may be selected in way of material from a metal, carbon and whisker of electrically conductive potassium titanate.

The invention also provides an article as obtained by the method as defined above.

Accordingly, the present invention relates to a method of conducting electrostatic coating of a crystalline thermoplastic resin molding, characterized by roughening the surface of a molding prepared from a resin composition comprising 100 parts by weight of a crystalline thermoplastic resin and 2 to 100 parts by weight of at least one conductive filler through a physical process comprising at least one of liquid honing, sandblasting, laser etching, sputter etching, and plasma etching and/or a chemical process comprising immersing said molded article in an aqueous solution containing at least one member selected from among sulfuric acid, hydrochloric acid, nitric acid, chromic acid, phosphoric acid, sodium hydroxide, and potassium hydroxide, and subjecting the resultant surface-roughened molding to electrostatic coating; and also to a coated plastic molding prepared by said method.

Examples of the crystalline thermoplastic resin include polyethylene, polypropylene, polyacetal, polyesters (polyethylene terephthalate, polybutylene terephthalate, wholly aromatic polyesters, etc.), polyphenylene sulfide, polyamide resins, fluororesins, and polymethylpentene-1. These resins may be used in the form of a mixture of two or more of them. Further, it is also possible to add as auxiliaries small amounts of amorphous thermoplastic resins (e.g., ABS, acrylic resins, polycarbonates, or phenoxy resins). The crystalline thermoplastic resin is preferably mainly composed of a polyacetal resin, a polyester resin, a polyphenylene sulfide resin, or the like.

Examples of the conductive filler used in the present invention include the following fibrous, flaky and particulate materials.

Examples of the fibrous conductive filler include carbon fibers (derived from PAN and pitch), metallic fibers (mild steel, stainless steel, copper and its alloys, brass, aluminum and its alloy, lead, etc.), metallized glass fibers (glass fibers coated with nickel, copper, aluminum, silver, etc.), metal-coated carbon fibers, and conductive potassium titanate whiskers.

Examples of the flaky and particulate conductive fillers include various metal powders (iron, copper, aluminum, silver, gold, nickel, zinc, brass, lead, and stainless steel) and their flakes, various carbon powders (Ketjen black, acetylene black, SRF carbon, graphite, activated carbon, etc.), and further carbon microballoon, and glass flakes coated with metals such as nickel, silver and copper.

The conductive filler used in the present invention is preferably a particulate material having a particle diameter of 30 $\mu$m or less (or flaky material) and/or a fibrous material having a diameter of 30 $\mu$m or less, still preferably a particulate material having a particle diameter of 15 $\mu$m or less or a fibrous material having a fiber diameter of 15 $\mu$m or less, and at least one member selected from the group consisting of Ketjen black, acetylene black, carbon fiber, conductive potassium titanate whisker, stainless steel (fiber, powder, and flake), and aluminum (fiber, powder, and flake). In general, the finer the conductive filler, the better the finishing and appearance and further the more advantageous in the coating deposition efficiency during electrostatic coating, adhesive strength, physical properties, or the like.

The amount of compounding of the conductive filler is determined so that the plastic has a surface resistivity of $10^0$ to $10^8$ $\Omega$ necessary for conducting electrostatic coating, and, in the present invention, the conductive filler is compounded in an amount of 2 to 100 parts by weight, particularly preferably 5 to 60 parts by weight, based on 100 parts by weight of the crystalline thermoplastic resin. When the amount of compounding is less than 2 parts by weight, the surface resistivity value of the molding exceeds $10^9$ $\Omega$ and brings about a lowering in the coating deposition efficiency during the electrostatic coating unfavorably, while when the amount of compounding exceeds 100 parts by weight, not only it becomes difficult to produce a resin composition but also mechanical properties such as tensile strength and elongation are lowered.

In the present invention, however, removal of the surface layer of the crystalline thermoplastic resin molding by a physical or chemical method eliminates local unevenness of the molding and makes it possible to attain uniform surface resistivity, so that it becomes possible to conduct uniform electrostatic coating even when the amount of use of the filler is relatively small.

Further, the resin composition containing the conductive filler incorporated therein may be mixed with known materials generally added to thermoplastic resins, thermosetting resins, etc., i.e., stabilizers such as antioxidants, heat stabilizers and ultraviolet absorbers, antistatic agents, flame retardants, coloring agents such as dyes and pigments, lubricants, crystallization promotors, and nuclearing agents, according to the purposes in such an amount as will exert no adverse effect on coatability, particularly on the adhesion of the coating film. Further, in order to improve the mechanical properties and further improve the adhesion of the coating film, organic or inorganic fibrous, particulate or flaky fillers other than those used as the conductive filler may be properly added in combination with the conductive filler according to the required performance.

Examples of the fibrous filler which may be used in combination with the conductive filler include glass fibers, silica fibers, silica-alumina fibers, zirconia fibers, boron nitride fibers, silicon nitride fibers, and boron fibers. A representative fibrous filler is a glass fiber. Further, it is also possible to use high-melting organic fibrous materials such as polyamide and acrylic resins.

Examples of the particulate filler include silica, ground quartz, glass bead, glass powder, silicates such as calcium silicate, aluminum silicate, kaolin, talc, clay, diatomaceous earth and wollastonite, metallic oxides such as iron oxide, titanium oxide, zinc oxide, lead oxide, aluminum oxide, magnesium oxide, calcium oxide and barium oxide, metallic carbonates such as calcium carbonate, magnesium carbonate and zinc carbonate, metallic sulfates such as calcium sulfate and barium sulfate, phosphates such as calcium phosphate, magnesium phosphate and calcium pyrophosphate, and other fillers such as silicon carbide, silicon nitride and boron nitride.

Examples of the flaky filler include mica and glass flake.

In particular, a combined use as an inorganic filler of metallic oxides such as magnesium oxide, calcium oxide, barium oxide, zinc oxide, lead oxide, aluminum oxide and titanium oxide, metallic carbonates such as calcium carbonate, magnesium carbonate and zinc carbonate, and further other fillers such as metallic sulfates and phosphates brings about formation of micropores in chemical etching, which contributes to an improvement in the adhesion of coating film by virtue of an anchoring effect.

The resin composition containing a conductive filler etc. incorporated therein and used in the present invention is generally prepared by making use of known equipment and methods commonly employed in the preparation of a synthetic resin composition. Specifically, the composition may be prepared by mixing necessary components, kneading and extruding the mixture with a single- or twin-screw extruder to prepare pellets for molding, and conducting molding. It is also possible to simultaneously conduct the preparation of the composition and the molding in a molding machine. Further, in order to improve the dispersion and mixing of each component, it is possible to employ a method which comprises pulverizing part or the whole of the resin component, mixing the components, melt-extruding the mixture to prepare pellets, and molding the pellets.

The above-described materials to be compounded, such as stabilizers and additives, may be added in any stage. It is a matter of course that they may be added and mixed immediately before preparation of a final molding.

The molding used in the present invention may be prepared by any of extrusion molding, injection molding, compression molding, vacuum molding, blow molding and foam molding.

The present invention is characterized by roughening the surface of the molding of the crystalline thermoplastic resin composition prepared by the above-described method through physical and/or chemical treatment and conducting electrostatic coating of the treated molding.

Examples of the physical surface roughening method include mechanical roughening methods, such as liquid honing and sandblasting, and other methods such as sputter etching, laser etching and plasma etching, among which plasma etching is preferred. Although the plasma etching may be conducted by making use of known apparatus and method, the adoption of the following method further ensures the electrostatic coating method of the present invention. Specifically, use is made of a bell jar type or cylindrical flow reactor. After the inside of the reaction tube is evacuated to a vacuum of $1 \times 10^{-3}$ Torr or less, an inert gas such as argon is flowed to regulate the pressure in the tube to $1 \times 10^{-1}$ Torr. A high d.c. voltage is applied across a pair of electrodes provided within the tube to generate a plasma through ionization by electron bombardment or ionization by high-frequency electric field of a radio wave. The plasma comprises excited molecules, ions, electrons, ultraviolet rays, etc., and when a sample to be treated is placed between the electrodes, the surface of the sample is activated by the generated plasma. When various gases are flowed instead of argon, it is possible to conduct etching so as to provide surface characteristics inherent in the gases.

Meanwhile in the chemical surface roughening method, the molding is immersed in an aqueous solution (etching solution) containing at least one member selected from among sulfuric acid, hydrochloric acid, nitric acid, chromic acid, phosphoric acid, sodium hydroxide, and potassium hydroxide to conduct etching. For example, an electrostatically coated plastic molding having excellent adhesive strength can be prepared by making use of the following combination of a crystalline thermoplastic resin with an etching solution and an immersion condition.

4

| | | Immersion condition | |
|---|---|---|---|
| Crystalline thermoplastic resin | Etching solution | temp. (°C) | time (min) |
| polyethylene resin | 98% sulfuric acid/chromic acid: 50 - 30 wt%/50 - 70 wt% | 20 - 70 | 1 - 5 |
| polypropylene resin | 98% sulfuric acid/chromic acid: 50 - 30 wt%/50 - 70 wt% | 20 - 70 | 1 - 5 |
| polyacetal resin | 98% sulfuric acid/85% phosphoric acid/water: 50 - 30 wt%/30 - 15 wt%/20 - 55 wt% | 20 - 50 | 2 - 15 |
| | 98% sulfuric acid/36% hydrochloric acid/water: 60 - 35 wt%/20 - 10 wt%/20 - 55 wt% | 20 - 50 | 2 - 15 |
| polybutylene terephthalate resin | 20 - 40% sodium hydroxide | 20 - 70 | 2 - 15 |
| polyethylene terephthalate resin | 20 - 40% sodium hydroxide | 20 - 70 | 2 - 15 |
| crystalline polyester resin | 30 - 50% sodium hydroxide | 30 - 70 | 3 - 15 |
| polyphenylene sulfide resin | 40 - 70% nitric acid | 20 - 50 | 3 - 15 |
| polyamide resin | 5 - 30% hydrochloric acid | 20 - 50 | 3 - 15 |

The etching conditions (liquid composition, temperature, treating time, etc.) may be investigated and selected depending upon the material for the molding through trial-and-error experiments. Although the etching conditions are not limited to the above-described examples only, these examples are recommended as preferred combinations.

The surface-treated molding is then subjected to electrostatic coating.

The electrostatic coating is conducted by making use of an electrostatic coating device generally employed in the art. Said device is an instrument having a paint atomizing device and a discharge electrode at the tip of an electrical insulator. The device may be any of stationary, portable, and automatic coating types. Examples of the atomization mechanism include electrical atomization and airless atomization, and examples of the form of the discharge electrode include those of stationary and rotary types. They may be used in combination for practising the present invention.

In the electrostatic field forming zone during electrostatic coating, in general, the higher the voltage, the higher the coating deposition efficiency because of a strong action of the mutual attractive force between positive and negative electrodes. The electrostatic coating is generally conducted at 60 to 100 kV.

The electrostatic coating according to the present invention may be conducted by making use of an apparatus generally employed for coating a metal and a method usually employed in the art. That is, neither any particular device nor any special method is necessary.

Examples of the paint used include generally used phthalate resin paints, melamine resin paints, epoxymelamine resin paints, acrylic paints, urethane paints, unsaturated polyester resin paints, and silicone resin paints. Some of these paints will not be electrified even when an electric charge is applied in electrostatic coating. In this case, it is effective to use a paint dissolved in an organic solvent such as an alcohol or ester.

The present invention is characterized by incorporating a conductive filler in a crystalline thermoplastic resin molding preferably so as to provide a surface resistivity of the molding of $10^9$ $\Omega$ or less for the purpose of satisfactorily conducting electrostatic coating of the molding and conducting electrostatic coating after physically and/or chemically roughening the surface of the molding for the purpose of maintaining the adhesion of the coating film after coating for a long period of time. This makes it possible to economically prepare a coated molding having excellent adhesion from a crystalline thermoplastic resin molding which is inherently poor in the coatability.

Here rhe electrostatic coating method and coated crystalline thermoplastic resin molding according to the present invention exhibits the following effects.

(1) It is very economical by virtue of high coating deposition efficiency.

(2) Excellent adhesive strength of a coating film can be attained even in the case of a crystalline thermoplastic resin which can hardly attain such strength.

(3) Coating of any form of a molding is possible. In particular, coating may be conducted even when the molding has a complicated form or a highly uneven form.

(4) Since the coating deposition efficiency is as high as 70 to 80%, there occurs no significant diffusion of a solvent, which contributes to an improvement in the environment of coating work.

(5) It is possible to conduct integral coating together with a conventional metallic molding.

(6) The amount of addition of a filler necessary for making the material electrically conductive can be reduced. This can reduce a lowering in the strength of the material.

The electrostatic coating method of the present invention is suitable for use in coating trims of an automobile, e.g., instrument covers, instrument panels, steering wheel and knob, exterior furnishings, e.g., outer door handles, antenna parts, wheel caps, door mirror stays, fuel lids, front fenders and spoilers, various electromagnetic shielding casings, cases for various electric appliances, instrument covers, handles, etc. for decoration, exterior parts of cameras and watches and clocks, and parts of furnitures requiring heat resistance, etc.

Brief Description of the Drawing:

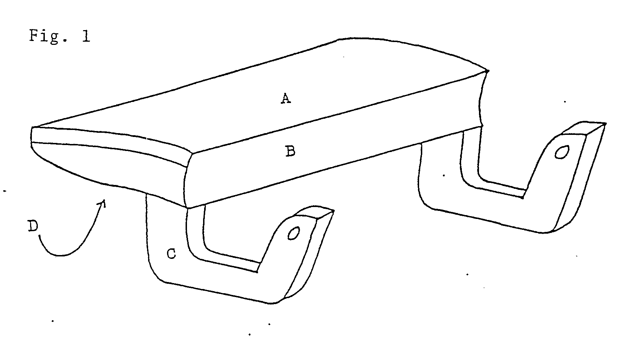

Fig. 1 is a perspective view of an outer door handle prepared in the example.

[Examples]

The present invention will now be described with reference to the following Examples which should not be construed as limiting the scope of the present invention.

In the Examples, the surface resistivity value and coating were evaluated by the following methods.

1) Surface resistivity value:

A molding after surface roughening (or before surface roughening in the case of some Comparative Examples) was degreased with isopropyl alcohol and then subjected to measurement of surface resistivity with a tester (HIOKI 3116 DIGITAL MΩHi Tester).

2) Coating appearance:

① Throwing property of paint:

In electrostatic coating of an outer door handle of an automobile as shown in Fig. 1, the degree of throwing of a finishing paint was evaluated according to the following five ranks:

0 point...deposition on only A section (top surface) and poor deposition on the periphery,

1 point...deposition on A and B sections,

2 point...deposition on the whole surface of A and B sections and the side of C section,

3 point...deposition on A, B, and C sections and slight deposition on D section, and

4 point...deposition on the whole surface of both sides of the handle.

② Gloss of coated surface:

After the door handle shown in Fig. 1 was coated, a fluorescent lamp image was projected on the top surface A section under a fluorescent lamp (40 W), and the state of projection of the image was evaluated according to the following five ranks:

0 point...projection of no image of the fluorescent lamp,

1 point...dim image of the fluorescent lamp,

2 point...waved image of the fluorescent lamp,

3 point...slightly dimmed contours of the fluorescent lamp image, and

4 point...clear projection of the fluorescent lamp.


3) Coating performance:


① Initial adhesion:

After a coated article was allowed to stand at room temperature for 24 hr, 11 scratches were made crosswise at intervals of 1 mm with a cutter knife. A cellophane tape (a product of Nichiban Co., Ltd.; specified in JIS; a width of 18 mm) was put on the formed measure comprising 100 squares of 1 mm. After pressing the tape by hand, the tape was peeled off, and the number of remaining squares was expressed based on 100 original squares.


② Adhesion after waterproofness test:

A coated article was immersed in hot water (distilled water) kept constant at 50°C for 120 hr, taken out of the hot water, allowed to stand at room temperature for 24 hr, and subjected to evaluation of the adhesion in the same manner as that used in the measurement of the initial adhesion.


Examples 1 to 21 and Comparative Examples 1 to 25

As shown in Table 1, after a conductive filler was added and blended with a crystalline thermoplastic resin, the mixture was melt kneaded with a twin-screw extruder at a temperature above the melting point of the resin used to prepare a pelletized composition. A model of an outer door handle of an automobile (project area: 120 mm x 30 mm) shown in Fig. 1 was molded with an injection molding machine (J75SA; a product of The Japan Steel Works, Ltd.).

The molded door handle was surface-roughened by physical and chemical treatments shown in Table 1, washed with a solvent or hot water at 60 to 80°C (except for treatment C-1), dried, coated with a paint shown in Table 1 by electrostatic coating by making use of an automatic electrostatic coater (Auto REA Gun; mfd. by RANSBURG-GEMA KK) under a voltage of 60 kV and an atomization air pressure of 1.5 kg/cm², set for 10 min, stoved and cured under curing conditions shown in Table 1, and applied to evaluation of a coated article. For comparison, the same evaluation was conducted on the case where electrostatic coating was conducted for a molding prepared without addition of a conductive filler and on the case where electrostatic coating was conducted without surface roughening of the molding. The results are summarized in Table 1.

7

Table 2

| Ex. No. | Crystalline thermoplastic resin (wt%) [1] | | Conductive filler [2] (wt%) | | Surface roughening (phys. & chem. treatment) [3] | Electrostatic coating | | Surface resistivity (Ω) [5] | Coating appearance | | Coating performance | |
|---|---|---|---|---|---|---|---|---|---|---|---|---|
| | | | | | | Paint [4] (curing condn.; temp., time) | | | Throwing property | Gloss | Initial adhesion | Adhesion after waterproofness test |
| 1 | A-1 | (96) | B-1 | (4) | C-1 | B-1 | (140°C, 30 min) | $4.6 \times 10^5$ | 4 | 4 | 100/100 | 100/100 |
| 2 | " | (96) | " | (4) | C-2 | " | ( " ) | " | " | 4 | " | " |
| 3 | " | (90) | B-2 | (10) | C-1 | " | ( " ) | $2.5 \times 10^6$ | " | 3 | " | " |
| 4 | " | (90) | " | (10) | C-2 | " | ( " ) | " | " | 3 | " | " |
| 5 | " | (90) | B-3 | (10) | C-1 | " | ( " ) | $3.5 \times 10^6$ | " | 4 | " | " |
| 6 | " | (90) | " | (10) | C-2 | " | ( " ) | " | " | 4 | " | " |
| 7 | " | (92) | B-1 | (8) | C-2 | " | ( " ) | $2.8 \times 10^5$ | " | 4 | " | " |
| 8 | " | (96) | " | (4) | " | B-2 | ( " ) | $4.6 \times 10^5$ | " | 4 | " | " |
| 9 | " | (96) | " | (4) | " | B-3 | ( " ) | " | " | 4 | " | " |
| 10 | " | (96) | " | (4) | " | B-4 | (80°C, 30 min) | " | " | 4 | " | " |
| 11 | A-2 | (96) | B-1 | (4) | C-1 | B-1 | (140°C, 30 min) | $5.1 \times 10^5$ | " | 4 | " | " |
| 12 | " | (96) | " | (4) | C-3 | " | ( " ) | " | " | 4 | " | " |
| 13 | " | (90) | B-2 | (10) | " | " | ( " ) | $7.2 \times 10^7$ | " | 3 | " | " |
| 14 | " | (90) | B-3 | (10) | " | " | ( " ) | $3.1 \times 10^6$ | " | 4 | " | " |
| 15 | " | (90) | " | (10) | " | B-3 | ( " ) | " | " | 4 | " | " |
| 16 | A-3 | (96) | B-1 | (4) | C-4 | B-1 | ( " ) | $5.6 \times 10^5$ | " | 4 | " | " |
| 17 | " | (90) | B-2 | (10) | " | " | ( " ) | $1.3 \times 10^6$ | " | 3 | " | " |
| 18 | " | (90) | B-3 | (10) | " | " | ( " ) | $2.7 \times 10^6$ | " | 4 | " | " |
| 19 | A-4 | (96) | B-1 | (4) | C-5 | B-1 | (140°C, 30 min) | $5.3 \times 10^5$ | " | 4 | " | " |
| 20 | " | (90) | B-2 | (10) | " | " | ( " ) | $1.9 \times 10^6$ | " | 3 | " | " |
| 21 | " | (90) | B-3 | (10) | " | " | ( " ) | $3.5 \times 10^6$ | " | 4 | " | " |

8

Table 1 (cont'd)

| Comp. Ex. No. | Crystalline thermoplastic resin (wt%) [1)] | | Conductive filler (wt%) [2)] | | Surface roughening (phys. & chem. treatment) [3)] | Electrostatic coating | | Surface resistivity (Ω) [5)] | Coating appearance | | Coating performance | |
|---|---|---|---|---|---|---|---|---|---|---|---|---|
| | | | | | | Paint [4)] (curing condn.; temp., time) | | | Throwing property | Gloss | Initial adhesion | Adhesion after waterproofness test |
| 1 | A-1 | (100) | — | | C-1 | B-1 | (140°C, 30 min) | $1.1\times10^{15}$ | 0 | 2 | — | — |
| 2 | " | (100) | — | | C-2 | " | ( " ) | " | 0 | 2 | — | — |
| 3 | " | (100) | — | | " | B-2 | ( " ) | " | 0 | 2 | — | — |
| 4 | " | (100) | — | | " | B-3 | ( " ) | " | 0 | 2 | — | — |
| 5 | " | (100) | — | | " | B-4 | (80°C, 30 min) | " | 0 | 2 | — | — |
| 6 | " | (96) | B-1 | (4) | — | B-1 | (140°C, 30 min) | $2.7\times10^{10}$ * | 3 | 4 | 0/100 | — |
| 7 | " | (90) | B-2 | (10) | — | " | ( " ) | $4.2\times10^{10}$ * | 3 | 3 | 0/100 | — |
| 8 | " | (90) | B-3 | (10) | — | " | ( " ) | $6.4\times10^{11}$ * | 3 | 4 | 0/100 | — |
| 9 | " | (96) | B-1 | (4) | — | B-2 | ( " ) | $2.7\times10^{10}$ * | 3 | 4 | 0/100 | — |
| 10 | " | (96) | " | (4) | — | B-3 | ( " ) | " * | 3 | 4 | 0/100 | — |
| 11 | " | (96) | " | (4) | — | B-4 | (80°C, 30 min) | " * | 3 | 4 | 0/100 | — |
| 12 | A-2 | (100) | — | | C-1 | B-1 | (140°C, 30 min) | $5.0\times10^{15}$ | 0 | 1 | — | — |
| 13 | " | (100) | — | | C-3 | " | ( " ) | " | 0 | 1 | — | — |
| 14 | " | (100) | — | | " | B-3 | ( " ) | $8.1\times10^{10}$ * | 0 | 1 | — | — |
| 15 | " | (96) | B-1 | (4) | — | B-1 | ( " ) | $3.8\times10^{10}$ * | 3 | 4 | 100/100 | 0/100 |
| 16 | " | (90) | B-2 | (10) | — | " | ( " ) | $1.9\times10^{11}$ * | 3 | 3 | 100/100 | 0/100 |
| 17 | " | (90) | B-3 | (10) | — | " | ( " ) | $4.3\times10^{11}$ * | 3 | 4 | 100/100 | 0/100 |
| 18 | A-3 | (100) | — | | C-4 | " | ( " ) | $6.0\times10^{15}$ | 0 | 1 | — | — |
| 19 | " | (96) | B-1 | (4) | — | " | ( " ) | $5.1\times10^{5}$ * | 4 | 4 | 100/100 | 0/100 |
| 20 | " | (90) | B-2 | (10) | — | " | ( " ) | $3.5\times10^{10}$ * | 3 | 3 | 100/100 | 0/100 |
| 21 | " | (90) | B-3 | (10) | — | " | ( " " ) | $6.3\times10^{10}$ * | 3 | 4 | 100/100 | 0/100 |
| 22 | A-4 | (100) | — | | C-5 | " | ( " ) | $8.0\times10^{15}$ | 0 | 1 | — | — |
| 23 | " | (96) | B-1 | (4) | — | " | ( " ) | $7.1\times10^{5}$ * | 4 | 4 | 100/100 | 0/100 |
| 24 | " | (90) | B-2 | (10) | — | " | ( " ) | $4.8\times10^{10}$ * | 3 | 3 | 100/100 | 0/100 |
| 25 | " | (90) | B-3 | (10) | — | " | ( " ) | $8.1\times10^{10}$ * | 3 | 4 | 100/100 | 0/100 |

Note 1):

    A-1: polyacetal resin (trade name "Duracon"; a product of Polyplastics Co., Ltd.)
    A-2: polybutylene terephthalate resin (trade name "Duranex"; a product of Polyplastics Co., Ltd.)
    A-3: crystalline polyester resin (trade name "Vectra"; a product of Polyplastics Co., Ltd.)
    A-4: polyphenylene sulfide resin (trade name "Fortron"; a product of Kureha Chemical Industry Co., Ltd.)

Note 2):

    B-1: Ketjen black EC (a particle diameter of 0.03 μm) (a product of Lion Corp.)
    B-2: carbon fiber (a fiber diameter of 0.018 μm; a length of 0.13 mm) (a product of Kureha Chemical Industry Co., Ltd.)
    B-3: conductive potassium titanate whisker (a fiber diameter of 0.2 to 0.5 μm; a length of 10 to 20 μm) (trade name "Dentall TM"; a product of Otsuka Chemical Co., Ltd.)

Note 3):

    C-1: Plasma etching:
Etching was conducted with a device of 13.56 MHx internal electrode system under the following conditions:
O$_2$ plasma
treating pressure: 0.05 Torr
discharge power: 70 W
treating time: 5 min
    C-2: 98% sulfuric acid/85% phosphoric acid/water: 40/25/35 (wt%)
Etched at 40°C for 5 min.
    C-3: 30% sodium hydroxide
Etched at 60°C for 5 min.
    C-4: 43% sodium hydroxide
Etched at 60°C for 5 min.
    C-5: 60% nitric acid
Etched at 30°C for 10 min.

Note 4):

    D-1: melamine alkyd paint (Amilac; a product of Kansai Paint Co., Ltd.)
    D-2: Acrylic paint (Belcoat No. 5800; a product of Nippon Oils & Fats Co., Ltd.)
    D-3: polyester paint (Melami No. 1500; a product of Nippon Oils & Fats Co., Ltd.)
    D-4: acrylic urethane paint (Soflex No. 5000; a product of Kansai Paint Co., Ltd.)

Note 5):

    Molded articles marked with an asterisk "*" which had not been subjected to surface roughening was degreased with isopropyl alcohol and then subjected to measurement of surface resistivity value.

## Claims

1. A method for producing a molded article of a crystalline thermoplastic resin with an electrostatic coating, which comprises preparing a molded article of a composition comprising 100 parts by weight of the crystalline thermoplastic resin and 2 to 100 parts by weight of at least one electrically conductive filler, roughening the surface of the article through (1) a chemical method and/or (2) a physical method and then electrostatically coating the article.

2. A method as claimed in Claim 1, in which the physical rouughening method (1) is selected from liquid honing, sandblasting, laser etching, sputter etching and plasma etching and the chemical roughening

10

method (2) is carried out by immersing the article in an aqueous solution of sulfuric acid, hydrochloric acid, nitric acid, chromic acid, phosphoric acid, sodium hydroxide and potassium hydroxide

3. A method as claimed in Claim 1 of Claim 2, in which the roughening step is conducted in order to improve the adhesion between the article and the electrostatically coated layer.

4. A method as claimed in any preceding Claim, in which the crystalline thermoplastic resin is selected from the group consisting of polyacetal, polyester and polyphenylene sulfide.

5. A method as claimed in any preceding Claim, in which the conductive filler is in the form of particles having an average size of 30 μm or smaller, flakes having an average size of 30 μm or smaller or fibers having an average diameter of 30 μm or smaller.

6. A method as claimed in Claim 5, in which the conductive filler is a particulate material having a particle diameter of 15 μm or less or a fibrous material having a fiber diameter of 15 μm or less.

7. A method as claimed in any preceding Claim, in which the conductive filler includes at least one material selected from a metal, carbon and whiskers of electrically conductive potassium titanate.

8. A method as claimed in any one of Claims 1 to 6, in which the conductive filler is a combination of an inorganic metal oxide or metal carbonate and a filler selected from metal sulfate or metal phosphate.

9. A method as claimed in any preceding Claim, in which the conductive filler is compounded in an amount of 5 to 60 parts by weight, based on 100 parts by weight of the crystalline thermoplastic resin.

10. An electrostatically-coated molded article obtained by a method as defined in any preceding Claim.

Fig. 1